# EUROPEAN PATENT APPLICATION

(11) **EP 2 869 526 A1**
(43) Date of publication of application: **06.05.2015**
(21) Application number: 13810430.2
(22) Date of filing: 25.06.2013
(51) Int. Cl.: H04L 29/06

(54) **SECURITY INFORMATION INTERACTION SYSTEM, DEVICE AND METHOD**

(30) Priority: 27.06.2012 CN 201210214594
(71) Applicant: China Unionpay Co., Ltd, Shanghai 200135 (CN)
(72) Inventor: CHAI, Hongfeng, Shanghai 200135 (CN); PENG, Xiaojun, Shanghai 200135 (CN); LU, Zhijun, Shanghai 200135 (CN); MENG, Hongwen, Shanghai 200135 (CN); LIU, Jian, Shanghai 200135 (CN); LV, Xufeng, Shanghai 200135 (CN); LI, Haochen, Shanghai 200135 (CN)
(74) Representative: Stork Bamberger
(86) International application number: PCT/CN2013/077876
(87) International publication number: WO 2014/000623

(57) **Abstract**

The present invention is directed to the system, device, and method for the interaction of security information. In the method for the interaction of the security information disclosed herein, a security information file processing server performs the operations related to the transfer of the first resource based on the security information file generated through the request of the second user, and wherein a first user performs the data interaction with the security information file processing server through a first smart card to determine whether to perform the transfer operation of a second resource associated with the transfer of the first resource. The system, device, and method for the interaction of security information disclosed herein are of high security and reliability.

## Description

### Technical Field

The present invention relates to the system, device, and method for the interaction of information, and particularly, to the system, device, and method for the interaction of security information, which are related to the transfer of resources.

### Background

Nowadays, with the increasing popularity of network applications and the emerging of various types of services in different fields, it is becoming more and more important to perform the interactions of security information (i.e., the information that requires relatively high security) related to the transfer of resources by means of security information files (e.g., the letter of credit in the financial field).

The basic operation procedure of the traditional system and method for the interaction of security information related to the transfer of resources is as follows: a first resource receiver (e.g., a buyer) initiates a request for generating a security information file (e.g., a letter of credit) associated with both a first resource (e.g., a physical resource) and a first resource transfer-out party (e.g., a seller) to a first resource transfer service provider (e.g., the buyer's account bank, and for example, a second resource may be funds) associated with the first resource receiver; the first resource transfer service provider generates and stores the security information file based on said request, and sends the security information file to a second resource transfer service provider (e.g., the seller's agreed collecting bank) associated with the first resource transfer-out party; the second resource transfer service provider receives the security information file and notifies the first resource transfer-out party; the first resource transfer-out party transmits the first resource to the first resource receiver through a third party (e.g., a freight company) and submits the physical document provided by the third party (e.g., the delivery order), which is required to take delivery of the first resource, to the second resource transfer service provider; the second resource transfer service provider checks the consistency of the content of the physical document required to take delivery of the first resource with the corresponding content in the security information file, and if there exists consistency, the second resource transfer service provider will transfer-out the second resource corresponding to the amount of the first resource to the first resource transfer-out party, and at the same time, transmits the physical document required to take delivery of the first resource to the first resource transfer service provider; the first resource transfer service provider checks the consistency of the content of the physical document required to take delivery of the first resource with the corresponding content in the security information file, and if there exists consistency, the first resource transfer service provider will transfer-out the second resource corresponding to the amount of the first resource to the second resource transfer service provider; the first resource transfer service provider notifies the first resource receiver that the physical document required to take delivery of the first resource have been received; the first resource receiver transfer-in the second resource corresponding to the amount of the first resource to the first resource transfer service provider, to obtain the physical document required to take delivery of the first resource, and then obtains the first resource based on the physical document required to take delivery of the first resource.

However, the conventional system and method for the interaction of security information related to the transfer of resources have the following drawbacks: since the security information file and the document required to take delivery of the first resource are both physical files, more manual processing steps will be involved, and thus it will be difficult to monitor the steps of processing and transferring such physical files, and the physical files can be easily tampered and forged, moreover, there is a lack of a mechanism for verifying the authenticity of the security information file and the document required to take delivery of the first resource, therefore, there exists high risk of security, furthermore, since the transfer of the second resource is separated from the transfer of the first resource (i.e., the first resource receiver has performed the transfer of the second resource before verifying the authenticity of the first resource), the quality and reliability of the transfer of the first resource through the interaction of the security information cannot be guaranteed (for example, the first resource may not be consistent with the expected).

Therefore, there exists a need for the system, device and method for interaction of the security information related to the transfer of resources with high security and reliability.

### SUMMARY

In order to solve the problems of the existing solutions as described above, the present invention provides the system, device and method for the interaction of security information related to the transfer of resources with high security and reliability.

The objects of the present invention is achieved by the technical solution as follows.

A method for the interaction of security information, comprising:
(A1) a security information file processing server generating and storing a security information file associated with the first resource based on a security information file establishing request from the second user and by means of the data interaction with a first smart card, a second smart card, a first security information data processing server, a second security information data processing server and a center of authentication (CA);
(A2) the security information file processing server performing the operations related to the transfer of the first resource based on the generated security information file, wherein a first user determines whether to perform the transfer operation of the second resource associated with the transfer of the first resource by means of the data interaction between the first smart card and the security information file processing server.

In the solutions disclosed above, preferably, the first smart card is private to the first user, and the second smart card is private to the second user.

In the solutions disclosed above, preferably, the security information file processing server is composed of a plurality of distributed physical entities.

In the solutions disclosed above, preferably, the security information file at least includes the following information: a security information file identifier, the information about the first resource receiver, the information about the first resource transfer-out party, the information about the first security information data processing server, and the information about the second security information data processing server.

In the solutions disclosed above, preferably, the security information file is in the form of an electronic file.

In the solutions disclosed above, preferably, step (A1) further comprising: after receiving the security information file establishing request, the security information file processing server prompts the second user to insert the second smart card and to input the PIN, and if the PIN is correct, sending a first data packet to the second smart card to request for a digital signature, wherein the first data packet at least includes a security information file identifier, the information about the first resource receiver, the information about the first resource transfer-out party, the information about the first security information data processing server and the information about the second security information data processing server.

In the solutions disclosed above, preferably, the step (A1) further comprising: after receiving the digital signature of the first data packet signed by the second smart card, the security information file processing server sends a security information file application notice to the first user.

In the solutions disclosed above, preferably, the step (A1) further comprising: after receiving the security information file application notice, the first user verifying the authenticity of the security information file application through a user interface of the security information file processing server, and if the authenticity is verified, inputting the information about the first resource receiver via the user interface, and the first user inserting the first smart card and inputting the PIN according to the prompt of the user interface, and if the PIN is correct, the security information file processing server sending a second data pocket to the first smart card to request for the digital signature, wherein the second data pocket at least includes a security information file identifier, the information about the first resource receiver, the information about the first resource transfer-out party, the information about the first security information data processing server and the information about the second security information data processing server.

In the solutions disclosed above, preferably, the step (A1) further comprising: after receiving the digital signature of the second data pocket signed by the first smart card, the security information file processing server sending a checking request to the first security information data processing server and the second security information data processing server respectively, wherein the checking request sent to the first security information data processing server includes all items constituting the security information file and the personal certificate of the first user, and the checking request sent to the second security information data processing server includes all items constituting the security information file and the personal certificate of the second user.

In the solutions disclosed above, preferably, the step (A1) further comprising: the first security information data processing server verifying the validity of the personal certificate of the first user through the center of authentication (CA) and verifying the validity of the digital signature of the first user through the personal certificate of the first user, and checking the security information file application according to the predefined rules and transmitting the result of the checking back to the security information file processing server.

In the solutions disclosed above, preferably, the step (A1) further comprising: the second security information data processing server verifying the validity of the personal certificate of the second user through the center of authentication (CA) and verifying the validity of the digital signature of the second user through the personal certificate of the second user, and checking the security information file application according to the predefined rules and transmitting the result of the checking back to the security information file processing server.

In the solutions disclosed above, preferably, the step (A1) further comprising: if one of the results of the checking from the first security information data processing server and the second security information data processing server is "not passed", the security information file processing sever terminating the interaction procedure of security information, and if all the results of the checking from the first security information data processing server and the second security information data processing server are "passed", the security information file processing sever generating the security information file, and prompting the first user to insert the first smart card and input the PIN via the user interface, and if the PIN is correct, the security information file processing server sending the security information file to the first smart card to request for a digital signature, and prompting the first user via the user interface that the security information file is established successfully after the digital signature is signed successfully, and then transmitting a message of successfully establishing the security information file to the second user.

In the solutions disclosed above, preferably, the step (A2) further comprising: after receiving the message of successfully establishing the security information file, the second user submitting the first resource to the third party for transmitting, and inputting the information associated with the transmitting of the first resource via the user interface of the security information file processing server, and uploading said information and the document required to take delivery of the first resource to the security information file processing server, wherein the user interface of the security information file processing server prompts the second user to insert the second smart card and input the PIN, and if the PIN is correct, transmitting the digest of the security information file generated based on a hash algorithm to the second smart card to request for a digital signature, and then transmitting the signed data to the security information file processing server in order to store it and update the status of the security information file.

In the solutions disclosed above, preferably, the step (A2) further comprising: after receiving the information associated with the transmitting of the first resource and the document required to take delivery of the first resource, the security information file processing server generating the electronic file(s) used to take delivery of the first resource, and then transmitting the message indicating that the document required to take delivery of the first resource has arrived to the first user.

In the solutions disclosed above, preferably, the step (A2) further comprising: after receiving the message indicating that the document required to take delivery of the first resource has arrived, the first user actually checking the first resource according to the message, and obtaining the document provided by the third party for confirming that the first resource has arrived.

In the solutions disclosed above, preferably, the step (A2) further comprising: after the result of actually checking the first resource is "passed", the first user inputting the result and data of the checking via the user interface of the security information file processing server and uploading the result and data of the checking and the electronic version of the document for confirming that the first resource has arrived to the security information file processing server, wherein the user interface of the security information file processing server prompts the first user to insert the first smart card and input the PIN, and if the PIN is correct, transmitting the digest of the information related to the result and data of the checking and the document for confirming that the first resource has arrived to the first smart card to request for a digital signature, wherein the digest is generated based on a hash algorithm, and then transmitting the signed data to the security information file processing server to store it and update the status of the security information file.

In the solutions disclosed above, preferably, the step (A2) further comprising: after receiving the electronic version of the document for confirming that the first resource has arrived, the security information file processing server transmitting a request for transferring-out a second resource to the first security information data processing server to complete the transfer-out operation of the second resource corresponding to the amount of the first resource, and then sending a request for transferring-in a second resource to the second security information data processing server to complete the transfer-in operation of the second resource corresponding to the amount of the first resource.

In the solutions disclosed above, preferably, the step (A2) further comprising: after completing the transfer-out operation and the transfer-in operation of the second resource, the security information file processing server prompting the first user via the user interface that the transfer of the second resource has completed, and prompting the first user to insert the first smart card and input the PIN, and if the PIN is correct, sending a instruction for repealing the security information file to the first smart card in order to complete the repealing operation of the security information file in the first smart card, and authorizing the first user to download the electronic file(s) required for taking delivery of the first resource after the repealing operation is completed, and then the security information file processing server notifying the second user that the transfer of the second resource is complete and the security information file has been repealed.

In the solutions disclosed above, preferably, the step (A2) further comprising: after downloading the electronic file(s) required for taking delivery of the first resource, the first user obtaining the first resource from the third party based on the electronic file(s) required for taking delivery of the first resource.

The objects of the present invention may also be achieved by the technical solution as follows.

A system for the interaction of security information, comprising:
a security information file processing server, configured to generate and store the security information file associated with the first resource based on a security information file establishing request from a second user and by means of the data interaction with a first smart card, a second smart card, a first security information data processing server, a second security information data processing server and a center of authentication (CA), and then to perform the operations related to the transfer of the first resource based on the generated security information file;
a first smart card, configured to assist the security information file processing server to generate the security information file by means of the data interaction with the security information file processing server, and then to confirm whether or not to perform a transfer operation of the second resource associated with the security information file by means of the data interaction with the security information file processing server, and to assist the first user to obtain the document required for taking delivery of the first resource by means of the data interaction with the security information file processing server in the case that the transfer operation of the second resource associated with the security information file has been performed;
a second smart card, configured to assist the security information file processing server to generate the security information file by means of the data interaction with the security information file processing server, and then to complete the operations related to the uploading and confirmation of the document by means of the data interaction with the security information file processing server;
a first security information data processing server, configured to assist to perform the operation of checking the security information file by means of the data interaction with the security information file processing server and the center of authentication (CA), and to assist the security information file processing server to perform the transfer operation of the second resource;
a second security information data processing server, configured to assist to perform the operation of checking the security information file by means of the data interaction with the security information file processing server and the center of authentication (CA), and to assist the security information file processing server to perform the transfer operation of the second resource;
a center of authentication, configured to complete the relevant data authentication operation by means of the data interaction with the security information file processing server, the first security information data processing server, and the second security information data processing server.

The objects of the present invention may also be achieved by the technical solution as follows.

A security information file processing server, comprising:
a user interface, configured to receive a security information file establishing request from a second user, and to transmit the security information file establishing request to a master controller module, the user interface also is configured to receive the information associated with the transmitting of the first resource input by the second user, and to transmit the information associated with the transmitting of the first resource to the master controller module, and the user interface further is configured to receive the information associated with the arrival of the first resource input by the first user, and to transmit the information associated with the arrival of the first resource to the master controller module;
a device interface, configured to perform the data communication between the security information file processing server and the first smart card, and to perform the data communication between the security information file processing server and the second smart card;
a master controller module, configured to process the received security information file establishing request, the information associated with the transmitting of the first resource and the information associated with the arrival of the first resource, and to transmit a corresponding notice message to a first user and/or a second user via a notification module so as to complete the operations related to the transfer of the first resource, and wherein, the master controller module forwards the security information file establishing request to the security information file generation module when the security information file establishing request is received;
a security information file generation module, configured to generate and store the security information file based on the received security information file establishing request and by means of the data interaction with the first smart card, the second smart card, the first security information data processing server, the second security information data processing server and the center of authentication (CA), and to transmit a corresponding notice message to the first user and/or the second user via the notification module;
a notification module, configured to transmit the notice message to the first user and/or the second user in a predefined manner;
a storage module, configured to store the security information file, the information associated with the transmitting of the first resource, the information associated with the arrival of the first resource and the document required for taking delivery of the first resource.

The system, device and method for the interaction of security information disclosed herein have the following advantages: since the security information file and the document required for taking delivery of the first resource are all encrypted electronic files, they can be easily monitored in the processing and transferring procedure and it will be difficult to tamper and fake them, moreover, since an authentication mechanism for files is introduced (the center of authentication (CA) may be an independent third party), the potential risk is avoided, furthermore, since the transfer of the second resource is performed under the premise that the first resource receiver has obtained the actual information of the first resource and thus has confirmed the first resource, the quality and reliability of the transfer of the first resource performed through the interaction of security information can be guaranteed, therefore, as can be seen, the system, device and method for the interaction of security information disclosed herein are of high security and reliability.

### BRIEF DESCRIPTION OF THE DRAWINGS

The technical features and advantages of the present invention will be better understood by the skilled in the art in connection with the accompany drawings, wherein:
Fig. 1 is an illustrative architecture view of the system for the interaction of security information according to the embodiment of the present invention;
Fig. 2 is a flow chart of the method for the interaction of security information according to the embodiment of the present invention.

### DETAILED DESCRIPTION

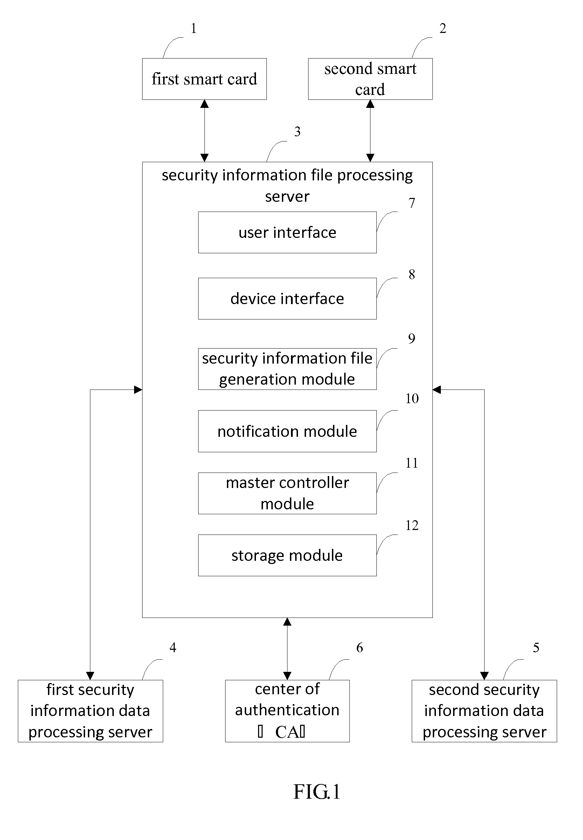

Fig. 1 is an illustrative architecture view of the system for the interaction of security information according to the embodiment of the present invention. As shown in Fig. 1, the system for the interaction of security information disclosed herein includes a first smart card 1, a second smart card 2, a security information file processing server 3, a first security information data processing server 4 (e.g., a first second resource service provider server, such as the data processing server of the buyer's account bank), a second security information data processing server 5 (e.g., a second second resource service provider server, such as the data processing server of the seller's agreed collecting bank), and a center of authentication (CA) 6. The security information file processing server 3 is configured to generate and store the security information file (e.g., a letter of credit in the financial field) associated with the first resource based on a security information file establishing request from the second user (e.g., the seller) and by means of the data interaction with the first smart card 1, the second smart card 2, the first security information data processing server 4, the second security information data processing server 5 and the center of authentication (CA) 6, and then to perform operations related to the transfer of the first resource based on the generated security information file. The first smart card 1 is configured to assist the security information file processing server 3 to generate the security information file by means of the data interaction with the security information file processing server 3, and then to confirm whether or not to perform the transfer operation of a second resource (such as the fund) associated with the security information file by means of the data interaction with the security information file processing server 3, and to assist the first user to obtain the document required for taking delivery of the first resource (e.g., the electronic photocopy of the delivery order) by means of the data interaction with the security information file processing server 3 in the case that the transfer operation of the second resource associated with the security information file has been performed. The second smart card 2 is configured to assist the security information file processing server 3 to generate the security information file by means of the data interaction with the security information file processing server 3, and then to complete the operations related to the uploading and confirmation of the document by means of the data interaction with the security information file processing server 3. The first security information data processing server 4 is configured to assist to perform the operation of checking the security information file by means of the data interaction with the security information file processing server 3 and the center of authentication (CA) 6, and to assist the security information file processing server 3 to perform the transfer operation of the second resource. The second security information data processing server 5 is configured to assist to perform the operation of checking the security information file by means of the data interaction with the security information file processing server 3 and the center of authentication (CA) 6, and to assist the security information file processing server 3 to perform the transfer operation of the second resource. The center of authentication 6 is configured to complete the relevant data authentication operation by means of the data interaction with the security information file processing server 3, the first security information data processing server 4 and the second security information data processing server 5.

Preferably, in the system for the interaction of security information disclosed herein, the first smart card 1 is private to the first user (e.g., the buyer), and the second smart card 2 is private to the second user (e.g., the seller).

Preferably, in the system for the interaction of security information disclosed herein, the security information file processing server 3 consists of a plurality of distributed physical entities, such as a plurality of sub-servers distributed at different geographical locations.

Illustratively, in the system for the interaction of security information disclosed herein, the security information file establishing request at least includes the following information: a security information file identifier, the information about the first resource receiver (i.e., the first user), the information about the first resource transfer-out party(i.e., the second user), the information about the first security information data processing server, and the information about the second security information data processing server.

Illustratively, in the system for the interaction of security information disclosed herein, the security information file at least includes the following information: a security information file identifier, the information about the first resource receiver, the information about the first resource transfer-out party, the information about the first security information data processing server and the information about the second security information data processing server.

Preferably, in the system for the interaction of security information disclosed herein, the security information file is in the form of an electronic file.

Preferably, in the system for the interaction of security information disclosed herein, the security information file processing server 3 further comprises a user interface 7, a device interface 8, a security information file generation module 9, a notification module 10, a master controller module 11 and a storage module 12. The user interface 7 is configured to receive a security information file establishing request from the second user, and to transmit the security information file establishing request to the master controller module 11. The user interface 7 is also configured to receive the information (e.g., the name of the third party that transmits the first resource) associated with the transmitting of the first resource input by the second user (e.g. the seller), and to transmit the information associated with the transmitting of the first resource to the master controller module 11. The user interface 7 is further configured to receive the information associated with the arrival of the first resource input by the first user (e.g., the buyer), and to transmit the information associated with the arrival of the first resource to the master controller module 11. The device interface 8 is configured to perform the data communication between the security information file processing server 3 and the first smart card 1 and to perform the data communication between the security information file processing server 3 and the second smart card 2 (for example, the device interface 8 is card reader). The master controller module 11 is configured to process the received security information file establishing request, the information associated with the transmitting of the first resource and the information associated with the arrival of the first resource, and to transmit a corresponding notice message to the first user and/or the second user via a notification module 10 to complete the operations related to the transfer of the first resource, wherein the master controller module 11 forwards the security information file establishing request to the security information file generation module 9 when the security information file establishing request is received. The security information file generation module 9 is configured to generate and store the security information file based on the received security information file establishing request and by means of the data interaction with the first smart card 1, the second smart card 2, the first security information data processing server 4, the second security information data processing server 5 and the center of authentication (CA) 6, and to transmit a corresponding notice message to the first user and/or the second user via the notification module 10. The notification module 10 is configured to transmit the notice message to the first user and/or the second user in a predefined manner (such as via an SMS message, an email, etc.) The storage module 12 is configured to store the security information file, the information associated with the transmitting of the first resource, the information associated with the arrival of the first resource and the document (e.g., the electronic photocopy of the delivery order) required for taking delivery of the first resource.

Preferably, in the system for the interaction of security information disclosed herein, the second user (e.g., the seller) upload the document (e.g., the electronic photocopy of the delivery order) required for taking delivery of the first resource to the security information file processing server 3 via the user interface 7.

Preferably, in the system for the interaction of security information disclosed herein, after receiving the security information file establishing request, the security information file generation module 9 promotes, via the user interface 7, the second user to insert the second smart card 2 and to input the PIN (Personal Identification Number), and if the PIN is correct, sends a first data pocket to the second smart card 2 to request for a digital signature, wherein the first data pocket at least includes a security information file identifier, the information about the first resource receiver, the information about the first resource transfer-out party, the information about the first security information data processing server and the information about the second security information data processing server.

Preferably, in the system for the interaction of security information disclosed herein, after receiving the digital signature of the first data pocket signed by the second smart card 2, the security information file generation module 9 sends a security information file application notice to the first user via the notification module 10.

Preferably, in the system for the interaction of security information disclosed herein, after receiving the security information file application notice, the first user verifies the authenticity of the security information file application through the user interface 7, and If the verification is passed, the first user inputs, via the user interface 7, the information about the first resource receiver, and the first user inserts the first smart card 1 and inputs the PIN (Personal Identification Number) according to the prompt of the user interface 7, and If the PIN is correct, the security information file generation module 9 sends a second data pocket to the first smart card 1 via the device interface 8 to request for an digital signature, wherein the second data pocket at least includes: a security information file identifier, the information about the first resource receiver, the information about the first resource transfer-out party, the information about the first security information data processing server and the information about the second security information data processing server.

Preferably, in the system for the interaction of security information disclosed herein, after receiving the digital signature of the second data pocket signed by the first smart card 1, the security information file generation module 9 sends a checking request to the first security information data processing server 4 and the second security information data processing server 5 respectively, wherein the checking request sent to the first security information data processing server 4 includes all items constituting the security information file and the personal certificate of the first user, and the checking request sent to the second security information data processing server 5 includes all items constituting the security information file and the personal certificate of the second user.

Preferably, in the system for the interaction of security information disclosed herein, the first security information data processing server 4 verifies the validity of the personal certificate of the first user through the center of authentication (CA) 6 and verifies the validity of the digital signature of the first user through the personal certificate of the first user, and checks the security information file application according to predefined rules (for example, checks the authenticity of the security information file application and checks whether the balance of the account of the first user meets certain conditions such as the requirement of currency amount for establishing the security information file), and then transmits the result of the checking back to the security information file generation module 9.

Preferably, in the system for the interaction of security information disclosed herein, the second security information data processing server 5 verifies the validity of the personal certificate of the second user through the center of authentication (CA) 6 and verifies the validity of the digital signature of the second user through the personal certificate of the second user, and checks the security information file application according to predefined rules (for example, checks the authenticity of the security information file application), and transmits the result of the checking back to the security information file generation module 9.

Preferably, in the system for the interaction of security information disclosed herein, if one of the results of the checking from the first security information data processing server 4 and the second security information data processing server 5 is "not passed", the security information file generation module 9 terminates the security information interaction procedure, and if all the results of the checking from the first security information data processing server 4 and the second security information data processing server 5 are "passed", the security information file generation module 9 generates the security information file, and prompts the first user to insert the first smart card 1 and input the PIN (Personal Identification Number) via the user interface 7, and If the PIN is correct, the security information file generation module 9 sends the security information file to the first smart card 1 via the device interface 8 to request for a digital signature, and after the signing operation is performed successfully, prompts the first user via the user interface 7 that the security information file is established successfully, and then transmits a message of successfully establishing the security information file to the second user via the notification module 10.

Preferably, in the system for the interaction of security information disclosed herein, after receiving the message of successfully establishing the security information file, the second user submits the first resource to the third party for transmitting, and inputs the information associated with the transmitting of the first resource via the user interface 7, and uploads said information and the documents (e.g., the electronic photocopy of the delivery order) required for taking delivery of the first resource to the security information file processing server 3, wherein the user interface 7 prompts the second user to insert the second smart card 2 and input the PIN (Personal Identification Number), and if the PIN is correct, the digest of the security information file generated by means of a hash algorithm is transmitted to the second smart card 2 to request for a digital signature, and then the signed data is transmitted to the master controller module 11 to be stored and the status of the security information file is updated.

Preferably, in the system for the interaction of security information disclosed herein, after receiving the information associated with the transmitting of the first resource and the documents required for taking delivery of the first resource, the master controller module 11 generates the electronic files used to take delivery of the first resource (optionally, the documents required for taking delivery of the first resource can be attached), and then transmits the message that the documents required for taking delivery of the first resource has arrived to the first user via the notification module 10.

Preferably, in the system for the interaction of security information disclosed herein, after receiving the message that the documents required for taking delivery of the first resource has arrived, the first user actually checks the first resource according to the message, and obtains the documents (for example, the documents about arrival of goods) of confirming that the first resource has arrived, which is provided by the third party.

Preferably, in the system for the interaction of security information disclosed herein, after the result of actually checking the first resource is "passed", the first user inputs the result and data (e.g., the amount of the first resource) of the checking via the user interface 7 and uploads the result and data of the checking and the electronic version of the documents for confirming that the first resource has arrived to the security information file processing server 3, wherein the user interface 7 prompts the first user to insert the first smart card 1 and input the PIN (Personal Identification Number), and if the PIN is correct, transmits the digest of the information related to the result and data of the checking and the electronic version of the documents for confirming that the first resource has arrived to the first smart card 1 to request for a digital signature, which digest is generated by means of a hash algorithm, and then the signed data is transmitted to the master controller module 11 to be stored and the status of the security information file is updated.

Preferably, in the system for the interaction of security information disclosed herein, after receiving the electronic version of the document for confirming that the first resource has arrived, the master controller module 11 transmits a request for transferring-out a second resource to the first security information data processing server 4 so as to complete the transferring-out operation of the second resource corresponding to the amount of the first resource (for example, the transferring-out of the fund), and then sends a request for transferring-in a second resource to the second security information data processing server 5 so as to complete the transferring-in operation of the second resource corresponding to the amount of the first resource (for example, the transferring-in of the fund).

Preferably, in the system for the interaction of security information disclosed herein, after completing the transferring-out operation and transferring-in operation of the second resource, the master controller module 11 prompts the first user that the transfer of the second resource has completed, and prompts the first user to insert the first smart card 1 and input the PIN (Personal Identification Number), and if the PIN is correct, sends a instruction for repealing the security information file to the smart card 1 so as to complete the operation repealing the security information file in the first smart card 1, and authorizes the first user to download the electronic files required for taking delivery of the first resource after the repealing operation is completed, and the master controller module 11 then notifies the second user via the notification module 10 that the transfer of the second resource has been completed and the security information file has been repealed.

Preferably, in the system for the interaction of security information disclosed herein, after downloading the electronic files required for taking delivery of the first resource, the first user obtains the first resource from the third party based on the files required for taking delivery of the first resource.

Preferably, in the system for the interaction of security information disclosed herein, the digital signature operations is performed using an asymmetrical-key algorithm (e.g., the RSA algorithm), and said hash algorithm is one of the following: MD5, and SHA-1.

As shown in Fig. 1, the present invention discloses a security information file processing server 3, including a user interface 7, a device interface 8, a security information file generation module 9, a notification module 10, a master controller module 11, and a storage module 12. The user interface 7 is configured to receive a security information file establishing request from a second user, and to transmit the security information file establishing request to the master controller module 11, the user interface 7 is also configured to receive the information (e.g., the name of the third party that transmits the first resource) associated with the transmitting of the first resource input by the second user (e.g. the seller), and to transmit the information associated with the transmitting of the first resource to the master controller module 11, and the user interface 7 is further configured to receive the information associated with the arrival of the first resource input by the first user (e.g., the buyer), and to transmit the information associated with the arrival of the first resource to the master controller module 11. The device interface 8 is configured to perform the data communication between the security information file processing server 3 and the first smart card 1 and to perform the data communication between the security information file processing server 3 and the second smart card 2 (illustratively, the device interface 9 is a card reader). The master controller module 11 is configured to process the received the security information file establishing request, the information associated with the transmitting of the first resource and the information associated with the arrival of the first resource, and to transmit the corresponding notice to the first user and/or the second user via a notification module 10 so as to complete the operations related to the transfer of the first resource, wherein the master controller module 11 forwards the security information file establishing request to the security information file generation module 9 when the security information file establishing request is received. The security information file generation module 9 is configured to generate and store the security information file based on the received security information file establishing request and by means of the data interaction with the first smart card 1, the second smart card 2, the first security information data processing server 4, the second security information data processing server 5 and the center of authentication (CA) 6, and to transmit a corresponding notice to a first user and/or a second user via a notification module 10. The notification module 10 is configured to transmit the notice to the first user and/or the second user in a predefined manner (such as via an SMS message and/or an email, etc.). The storage module 12 is configured to store the security information file, the information associated with the transmitting of the first resource, the information associated with the arrival of the first resource and the documents required for taking delivery of the first resource (e.g., the electronic photocopy of the delivery order).

Preferably, in the security information file processing server 3 disclosed herein, the first smart card 1 is private to the first user (e.g., the buyer), and the second smart card 2 is private to the second user (e.g., the seller).

Preferably, in the security information file processing server 3 disclosed herein, the security information file processing server 3 is composed of a plurality of distributed physical entities (such as a plurality of sub-servers distributed at different geographical locations).

Illustratively, in the security information file processing server 3 disclosed herein, the security information file establishing request at least includes the following information: a security information file identifier, the information about the first resource receiver (i.e., the first user), the information about the first resource transfer-out party (i.e., the second user), the information about the first security information data processing server and the information about the second security information data processing server.

Illustratively, in the security information file processing server 3 disclosed herein, the security information file at least includes the following information: a security information file identifier, the information about the first resource receiver, the information about the first resource transfer-out party, the information about the first security information data processing server and the information about the second security information data processing server.

Preferably, in the security information file processing server 3 disclosed herein, the security information file is in the form of an electronic file.

Preferably, in the security information file processing server 3 disclosed herein, the second user (e.g., the seller) uploads the documents required for taking delivery of the first resource (e.g., the electronic photocopy of the delivery order) to the security information file processing server 3 via the user interface 7.

Preferably, in the security information file processing server 3 disclosed herein, after receiving the security information file establishing request, the security information file generation module 9 promotes, via the user interface 7, the second user to insert the second smart card 2 and to input the PIN (Personal Identification Number), and if the PIN is correct, sends a first data pocket to the second smart card 2 to request for a digital signature, wherein the first data pocket at least includes a security information file identifier, the information about the first resource receiver, the information about the first resource transfer-out party, the information about the first security information data processing server and the information about the second security information data processing server.

Preferably, in the security information file processing server 3 disclosed herein, after receiving the digital signature of the first data pocket signed by the second smart card 2, the security information file generation module 9 sends a security information file application notice to the first user via the notification module 10.

Preferably, in the security information file processing server 3 disclosed herein, after receiving the security information file application notice, the first user verifies the authenticity of the security information file application through the user interface 7, and if the authenticity of the security information file application is verified, the first user inputs, via the user interface 7, the information about the first resource receiver, and then the first user inserts the first smart card 1 and inputs the PIN (Personal Identification Number) according to the prompt of the user interface 7, and if the PIN is correct, the security information file generation module 9 sends a second data pocket to the first smart card 1 via the device interface 8 to request for the digital signature, wherein the second data pocket at least includes a security information file identifier, the information about the first resource receiver, the information about the first resource transfer-out party, the information about the first security information data processing server and the information about the second security information data processing server.

Preferably, in the security information file processing server 3 disclosed herein, after receiving the digital signature of the second data pocket signed by the first smart card 1, the security information file generation module 9 sends a checking request to the first security information data processing server 4 and the second security information data processing server 5 respectively, wherein the checking request sent to the first security information data processing server 4 includes all items constituting the security information file and the personal certificate of the first user, and the checking request sent to the second security information data processing server 5 includes all items constituting the security information file and the personal certificate of the second user.

Preferably, in the security information file processing server 3 disclosed herein, the first security information data processing server 4 verifies the validity of the personal certificate of the first user through the center of authentication (CA) 6 and verifies the validity of the digital signature of the first user through the personal certificate of the first user, and checks the security information file application according to predefined rules (for example, checks the authenticity of the security information file application and checks whether the balance of the account of the first user meets certain conditions such as the currency amount requirement for establishing the security information file), and transmits the result of the checking back to the security information file generation module 9.

Preferably, in the security information file processing server 3 disclosed herein, the second security information data processing server 5 verifies the validity of the personal certificate of the second user through the center of authentication (CA) 6 and verifies the validity of the digital signature of the second user through the personal certificate of the second user, and then checks the security information file application according to predefined rules (for example, checks the authenticity of the security information file application), and transmits the result of the checking back to the security information file generation module 9.

Preferably, in the security information file processing server 3 disclosed herein, if one of the results of the checking from the first security information data processing server 4 and the second security information data processing server 5 is "not passed", the security information file generation module 9 terminates the security information interaction procedure, and if all the results of the checking from the first security information data processing server 4 and the second security information data processing server 5 are "passed", the security information file generation module 9 generates the security information file, and prompts the first user to insert the first smart card 1 and input the PIN (Personal Identification Number) via the user interface 7, and if the PIN is correct, the security information file generation module 9 sends the security information file to the first smart card 1 via the device interface 8 to request for a digital signature, and after the signing operation is performed successfully, prompts the first user via the user interface 7 that the security information file is established successfully, and then transmits a message of successfully establishing the security information file to the second user via the notification module 10.

Preferably, in the security information file processing server 3 disclosed herein, after receiving the message of successfully establishing the security information file, the second user submits the first resource to the third party for transmitting, and inputs the information associated with the transmitting of the first resource via the user interface 7, and uploads said information and the documents required for taking delivery of the first resource (e.g., the electronic photocopy of the delivery order) to the security information file processing server 3, wherein the user interface 7 prompts the second user to insert the second smart card 2 and input the PIN (Personal Identification Number), and if the PIN is correct, the digest of the security information file generated based on a hash algorithm is transmitted to the second smart card 2 to request for a digital signature, and then the signed data is transmitted to the master controller module 11 to be stored and the status of the security information file is updated.

Preferably, in the security information file processing server 3 disclosed herein, after receiving the information associated with the transmitting of the first resource and the documents required for taking delivery of the first resource, the master controller module 11 generates the electronic files used to take delivery of the first resource (optionally, the documents required for taking delivery of the first resource can be attached), and then transmits the message that the documents required for taking delivery of the first resource has arrived to the first user via the notification module 10.

Preferably, in the security information file processing server 3 disclosed herein, after receiving the message that the documents required for taking delivery of the first resource has arrived, the first user actually checks the first resource according to the message, and obtains the documents (for example, the documents of arrival of goods) provided by the third party for confirming that the first resource has arrived.

Preferably, in the security information file processing server 3 disclosed herein, after the result of actually checking the first resource is "passed", the first user inputs the result and data (e.g., the amount of the first resource) of the checking via the user interface 7 and uploads the result and data of the checking and the electronic version of the document for confirming that the first resource has arrived to the security information file processing server 3, wherein the user interface 7 prompts the first user to insert the first smart card 1 and input the PIN (Personal Identification Number), and if the PIN is correct, transmits the digest of the information related to the result and data of the checking and the electronic version of the documents for confirming that the first resource has arrived to the first smart card 1 to request for a digital signature, which digest is generated based on a hash algorithm, and then transmits the signed data to the master controller module 11 to be stored and the status of the security information file is updated.

Preferably, in the security information file processing server 3 disclosed herein, after receiving the electronic version of the documents for confirming that the first resource has arrived, the master controller module 11 transmits a request for transferring-out a second resource to the first security information data processing server 4 so as to complete the transferring-out operation of the second resource corresponding to the amount of the first resource (for example, the transferring-out of the fund), and then sends a request for transferring-in a second resource to the second security information data processing server 5 so as to complete the transferring-in operation of the second resource corresponding to the amount of the first resource (for example, the transferring-in of the fund).

Preferably, in the security information file processing server 3 disclosed herein, after completing the transferring-out operation and the transferring-in operation of the second resource, the master controller module 11 prompts the first user via the user interface 7 that the transfer of the second resource has been completed, and prompts the first user to insert the first smart card 1 and input the PIN (Personal Identification Number), and if the PIN is correct, sends a instruction for repealing the security information file to the first smart card 1 so as to complete the repealing operation of the security information file in the first smart card 1, and authorizes the first user to download the electronic files used to take delivery of the first resource after the repealing operation is completed. The master controller module 11 then notifies the second user that the transfer of the second resource has been completed and the security information file has been repealed via the notification module 10.

Preferably, in the security information file processing server 3 disclosed herein, after downloading the electronic files for taking delivery of the first resource, the first user obtains the first resource from the third party based on the electronic files for taking delivery of the first resource.

Preferably, in the security information file processing server 3 disclosed herein, the digital signature operation is performed using an asymmetrical-key algorithm (e.g., the RSA algorithm), and the hash algorithm is one of the following: MD5, and SHA-1.

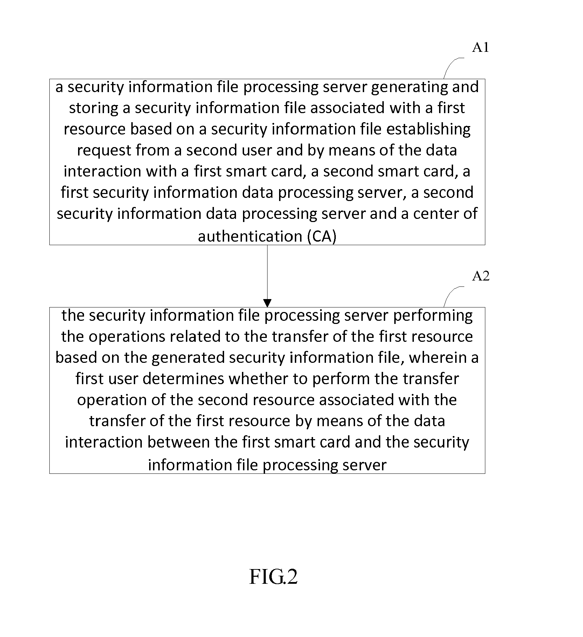

Fig. 2 is a flow chart of the method for the interaction of security information according to the embodiment of the present invention. As shown in Fig. 2, the method for the interaction of security information disclosed herein comprises the following steps: (A1) a security information file processing server generating and storing a security information file (e.g., the letter of credit in the financial field) associated with the first resource (e.g., physical resources) based on a request based on a security information file establishing request from the second user (e.g., the seller) and by means of the data interaction with a first smart card, a second smart card, a first security information data processing server, a second security information data processing server and a center of authentication (CA); (A2) the security information file processing server performing the operations related to the transfer of the first resource based on the generated security information file, wherein a first user determines whether to perform the transfer operation of the second resource (e.g., the fund) associated with the transfer of the first resource by means of the data interaction between the first smart card and the security information file processing server.

Preferably, in the method for the interaction of security information disclosed herein, the first smart card 1 is private to the first user (e.g., the buyer), and the second smart card 2 is private to the second user (e.g., the seller).

Preferably, in the method for the interaction of security information disclosed herein, the security information file processing server is composed of a plurality of distributed physical entities, such as a plurality of sub-servers distributed at different geographical locations.

Illustratively, in the method for the interaction of security information disclosed herein, the security information file establishing request at least includes the following information: a security information file identifier, the information about the first resource receiver (i.e., the first user), the information about the first resource transfer-out party (i.e., the second user), the information about the first security information data processing server and the information about the second security information data processing server.

Illustratively, in the method for the interaction of security information disclosed herein, the security information file at least includes the following information: a security information file identifier, the information about the first resource receiver, the information about the first resource transfer-out party, the information about the first security information data processing server and the information about the second security information data processing server.

Preferably, in the method for the interaction of security information disclosed herein, the security information file is in the form of an electronic file.

Preferably, in the method for the interaction of security information disclosed herein, the step (A1) further comprising: after receiving the security information file establishing request, the security information file processing server prompting the second user to insert the second smart card and to input the PIN (Personal Identification Number), and if the PIN is correct, sending a first data pocket to the second smart card to request for a digital signature, wherein the first data pocket at least includes a security information file identifier, the information about the first resource receiver, the information about the first resource transfer-out party, the information about the first security information data processing server and the information about the second security information data processing server.

Preferably, in the method for the interaction of security information disclosed herein, the step (A1) further comprising: after receiving the digital signature of the first data pocket signed by the second smart card, the security information file processing server sending a security information file application notice to the first user.

Preferably, in the method for the interaction of security information disclosed herein, the step (A1) further comprising: after receiving the security information file application notice, the first user verifying the authenticity of the security information file application through a user interface of the security information file processing server, and if the authenticity is verified, inputting the information about the first resource receiver via the user interface, and the first user inserting the first smart card 1 and inputting the PIN (Personal Identification Number) according to the prompt of the user interface, and if the PIN is correct, the security information file processing server sending a second data pocket to the first smart card to request for the digital signature, wherein the second data pocket at least includes a security information file identifier, the information about the first resource receiver, the information about the first resource transfer-out party, the information about the first security information data processing server and the information about the second security information data processing server.

Preferably, in the method for the interaction of security information disclosed herein, the step (A1) further comprising: after receiving the digital signature of the second data pocket signed by the first smart card, the security information file processing server sending a checking request to the first security information data processing server and the second security information data processing server respectively, wherein the checking request sent to the first security information data processing server includes all items constituting the security information file and the personal certificate of the first user, and the checking request sent to the second security information data processing server includes all items constituting the security information file and the personal certificate of the second user.

Preferably, in the method for the interaction of security information disclosed herein, the step (A1) further comprising: the first security information data processing server verifying the validity of the personal certificate of the first user through the center of authentication (CA) and verifying the validity of the digital signature of the first user through the personal certificate of the first user, and checking the security information file application according to the predefined rules (for example, checking the authenticity of the security information file application and checking whether the balance of the account of the first user meets certain conditions such as the currency amount requirement for establishing the security information file), and transmitting the result of the checking back to the security information file processing server.

Preferably, in the method for the interaction of security information disclosed herein, the step (A1) further comprising: the second security information data processing server verifying the validity of the personal certificate of the second user through the center of authentication (CA) and verifying the validity of the digital signature of the second user through the personal certificate of the second user, and checking the security information file application according to the predefined rules (for example, checking the authenticity of the security information file application), and transmitting the result of the checking back to the security information file processing server.

Preferably, in the method for the interaction of security information disclosed herein, the step (A1) further comprising: if one of the results of the checking from the first security information data processing server and the second security information data processing server is "not passed", the security information file processing sever terminating the security information interaction procedure, and if all the results of the checking from the first security information data processing server and the second security information data processing server are "passed", the security information file processing sever generating the security information file, and prompting the first user to insert the first smart card and input the PIN (Personal Identification Number) via the user interface; and if the PIN is correct, the security information file processing server sending the security information file to the first smart card to request for a digital signature, and prompting the first user via the user interface that the security information file is established successfully after the signing operation is performed successfully, and then transmitting a message of successfully establishing the security information file to the second user.

Preferably, in the method for the interaction of security information disclosed herein, the step (A2) further comprising: after receiving the message of successfully establishing the security information file, the second user submitting the first resource to the third party for transmitting, and inputting the information associated with the transmitting of the first resource via the user interface of the security information file processing server, and uploading said information and the documents required for taking delivery of the first resource (e.g., the electronic photocopy of the delivery order) to the security information file processing server, wherein the user interface of the security information file processing server prompts the second user to insert the second smart card and input the PIN (Personal Identification Number), and if the PIN is correct, transmitting the digest of the security information file generated based on a hash algorithm to the second smart card to request for a digital signature, and then transmitting the signed data to the security information file processing server to be stored and update the status of the security information file.

Preferably, in the method for the interaction of security information disclosed herein, the step (A2) further comprising: after receiving the information associated with the transmitting of the first resource and the documents required for taking delivery of the first resource, the security information file processing server generating the electronic files used to take delivery of the first resource (optionally, the documents required for taking delivery of the first resource can be attached), and then transmitting the message that the documents required for taking delivery of the first resource has arrived to the first user.

Preferably, in the method for the interaction of security information disclosed herein, the step (A2) further comprising: after receiving the message that the documents required for taking delivery of the first resource has arrived, the first user actually checking the first resource according to the message, and obtaining the documents (for example, the documents of arrival of goods) for confirming that the first resource has arrived, which documents are provided by the third party.

Preferably, in the method for the interaction of security information disclosed herein, the step (A2) further comprising: after the result of actually checking the first resource is "passed", the first user inputting the result and data (e.g., the amount of the first resource) of the checking via the user interface of the security information file processing server and uploading the result and data of the checking and the electronic version of the document for confirming that the first resource has arrived to the security information file processing server, wherein the user interface of the security information file processing server prompts the first user to insert the first smart card and input the PIN (Personal Identification Number), and if the PIN is correct, transmitting the digest of the information related to the result and data of the checking and the electronic version of the document for confirming that the first resource has arrived to the first smart card to request for a digital signature, which digest is generated based on a hash algorithm, and then transmitting the signed data to the security information file processing server to be stored and to update the status of the security information file.

Preferably, in the method for the interaction of security information disclosed herein, the step (A2) further comprising: after receiving the electronic version of the document for confirming that the first resource has arrived, the security information file processing server transmitting a request for transferring-out a second resource to the first security information data processing server so as to complete the transferring-out operation of the second resource corresponding to the amount of the first resource (for example, the transferring-out of the fund), and then sending a request for transferring-in a second resource to the second security information data processing server so as to complete the transferring-in operation of the second resource corresponding to the amount of the first resource (for example, the transferring-in of the fund).

Preferably, in the method for the interaction of security information disclosed herein, the step (A2) further comprising: after completing the transferring-out operation and the transferring-in operation of the second resource, the security information file processing server prompting the first user via the user interface that the transfer of the second resource has been completed, and prompting the first user to insert the first smart card and input the PIN (Personal Identification Number), and if the PIN is correct, sending an instruction for repealing the security information file to the first smart card so as to complete the repealing operation of the security information file in the first smart card, and authorizing the first user to download the electronic file required for taking delivery of the first resource after the repealing operation is completed, and the security information file processing server then notifying the second user that the transfer of the second resource has been completed and the security information file has been repealed.

Preferably, in the method for the interaction of security information disclosed herein, the step (A2) further comprising: after downloading the electronic file required for taking delivery of the first resource, the first user obtaining the first resource from the third party based on the file required for taking delivery of the first resource.

Preferably, in the method for the interaction of security information disclosed herein, the digital signature operation is performed using an asymmetrical-key algorithm (e.g., the RSA algorithm), and the hash algorithm is one of the following: MD5, and SHA-1.

Although the present invention has been described in connection with the preferred embodiments described above, the implementations of the present invention are not limited to the above embodiments. Rather, it is to be understood that various alterations and modifications could be made by one skilled in the art without departing from the spirit and scope of this invention.

## Claims

1. A method for the interaction of security information, comprising:
(A1) a security information file processing server generating and storing a security information file associated with a first resource based on a security information file establishing request from a second user and by means of the data interaction with a first smart card, a second smart card, a first security information data processing server, a second security information data processing server and a center of authentication (CA); and
(A2) the security information file processing server performing the operations related to the transfer of the first resource based on the generated security information file, wherein a first user determines whether to perform the transfer operation of the second resource associated with the transfer of the first resource by means of the data interaction between the first smart card and the security information file processing server.

2. The method for the interaction of security information of claim 1, characterize in that, the security information file processing server is composed of a plurality of distributed physical entities.

3. The method for the interaction of security information of claim 2, characterize in that, the security information file at least includes the following information: a security information file identifier, the information about the first resource receiver, the information about the first resource transfer-out party, the information about the first security information data processing server and the information about the second security information data processing server.

4. The method for the interaction of security information of claim 3, characterize in that, the step (A1) further comprising: after receiving the security information file establishing request, the security information file processing server prompting the second user to insert the second smart card and to input the PIN, and if the PIN is correct, sending a first data pocket to the second smart card to request for a digital signature, wherein the first data pocket at least includes a security information file identifier, the information about the first resource receiver, the information about the first resource transfer-out party, the information about the first security information data processing server and the information about the second security information data processing server.

5. The method for the interaction of security information of claim 4, characterize in that, the step (A1) further comprising: after receiving the digital signature of the first data pocket signed by the second smart card, the security information file processing server sends a security information file application notice to the first user.

6. The method for the interaction of security information of claim 5, characterize in that, the step (A1) further comprising: after receiving the security information file application notice, the first user verifying the authenticity of the security information file application via a user interface of the security information file processing server, and if the authenticity is verified, inputting the information about the first resource receiver via the user interface, and the first user inserting the first smart card and inputting the PIN according to the prompt of the user interface, and if the PIN is correct, the security information file processing server sending a second data pocket to the first smart card to request for a digital signature, wherein the second data pocket at least includes a security information file identifier, the information about the first resource receiver, the information about the first resource transfer-out party, the information about the first security information data processing server and the information about the second security information data processing server.

7. The method for the interaction of security information of claim 6, characterize in that, the step (A1) further comprising: after receiving the digital signature of the second data pocket signed by the first smart card, the security information file processing server sending a checking request to the first security information data processing server and the second security information data processing server respectively, wherein the checking request sent to the first security information data processing server includes all items constituting the security information file and the personal certificate of the first user, and the checking request sent to the second security information data processing server includes all items constituting the security information file and the personal certificate of the second user.

8. The method for the interaction of security information of claim 7, characterize in that, the step (A1) further comprising: the first security information data processing server verifying the validity of the personal certificate of the first user through the center of authentication (CA) and verifying the validity of the digital signature of the first user through the personal certificate of the first user, and checking the security information file application according to the predefined rules, and transmitting the result of the checking back to the security information file processing server.

9. The method for the interaction of security information of claim 8, characterize in that, the step (A1) further comprising: the second security information data processing server verifying the validity of the personal certificate of the second user through the center of authentication (CA) and verifying the validity of the digital signature of the second user through the personal certificate of the second user, and checking the security information file application according to the predefined rules, and transmitting the result of the checking back to the security information file processing server.

10. The method for the interaction of security information of claim 9, characterize in that, the step (A1) further comprising: if one of the results of the checking from the first security information data processing server and the second security information data processing server is "not passed", the security information file processing sever terminating the security information interaction procedure, and if all the results of the checking from the first security information data processing server and the second security information data processing server are "passed", the security information file processing sever generating the security information file, and prompting the first user to insert the first smart card and input the PIN via the user interface, and if the PIN is correct, the security information file processing server sending the security information file to the first smart card to request for a digital signature, and prompting the first user via the user interface that the security information file is established successfully, and then transmitting a message of successfully establishing the security information file to the second user.

11. The method for the interaction of security information of claim 10, characterize in that, the step (A2) further comprising: after receiving the message of successfully establishing the security information file, the second user submitting the first resource to the third party for transmitting, and inputting the information associated with the transmitting of the first resource via the user interface of the security information file processing server, and uploading said information and the document required for taking delivery of the first resource to the security information file processing server, wherein the user interface of the security information file processing server prompts the second user to insert the second smart card and input the PIN, and if the PIN is correct, transmitting the digest of the security information file generated based on a hash algorithm to the second smart card to request for a digital signature, and then transmitting the signed data to the security information file processing server to be stored and to update the status of the security information file.

12. The method for the interaction of security information of claim 11, characterize in that, the step (A2) further comprising: after receiving the information associated with the transmitting of the first resource and the document required for taking delivery of the first resource, the security information file processing server generating the electronic files used to take delivery of the first resource, and then transmitting the message that the document required for taking delivery of the first resource has arrived to the first user.

13. The method for the interaction of security information of claim 12, characterize in that, the step (A2) further comprising: after receiving the message that the document required for taking delivery of the first resource has arrived, the first user actually checking the first resource according to the message, and obtaining the document provided by the third party for confirming that the first resource has arrived.

14. The method for the interaction of security information of claim 13, characterize in that, the step (A2) further comprising: after the result of actually checking the first resource is "passed", the first user inputting the result and data of the checking via the user interface of the security information file processing server and uploading the result and data of the checking and the electronic version of the document for confirming that the first resource has arrived to the security information file processing server, wherein the user interface of the security information file processing server prompts the first user to insert the first smart card and input the PIN, and if the PIN is correct, transmitting the digest of the information related to the result and data of the checking and the electronic version of the document for confirming that the first resource has arrived to the first smart card to request for a digital signature, which digest is generated based on a hash algorithm, and then transmitting the signed data to the security information file processing server to be stored and to update the status of the security information file.

15. The method for the interaction of security information of claim 14, characterize in that, the step (A2) further comprising: after receiving the electronic version of the document for confirming that the first resource has arrived, the security information file processing server transmitting a request for transferring-out a second resource to the first security information data processing server so as to complete the transferring-out operation of the second resource corresponding to the amount of the first resource, and then sending a request for transferring-in a second resource to the second security information data processing server so as to complete the transferring-in operation of the second resource corresponding to the amount of the first resource.

16. The method for the interaction of security information of claim 15, characterize in that, the step (A2) further comprising: after completing the transferring-out operation and the transferring-in operation of the second resource, the security information file processing server prompting the first user via the user interface that the transfer of the second resource has been completed, and prompting the first user to insert the first smart card and input the PIN, and if the PIN is correct, sending an instruction for repealing the security information file to the first smart card so as to complete the repealing operation of the security information file in the first smart card, and authorizing the first user to download the electronic file for taking delivery of the first resource after the repealing operation is completed, and the security information file processing server then notifying the second user that the transfer of the second resource has been completed and the security information file has been repealed.

17. The method for the interaction of security information of claim 16, characterize in that, the step (A2) further comprising: after downloading the electronic file for taking delivery of the first resource, the first user obtaining the first resource from the third party based on the electronic file for taking delivery of the first resource.

18. A system for the interaction of security information, comprising:
a security information file processing server, configured to generate and store a security information file associated with the first resource based on a security information file establishing request from a second user and by means of the data interaction with a first smart card, a second smart card, a first security information data processing server, a second security information data processing server and a center of authentication (CA), and then to perform the operations related to the transfer of the first resource based on the generated security information file;
a first smart card, configured to assist the security information file processing server to generate the security information file by means of the data interaction with the security information file processing server, and then to determine whether to perform the transfer operation of a second resource associated with the security information file by means of the data interaction with the security information file processing server, and to assist the first user to obtain the document required for taking delivery of the first resource by means of the data interaction with the security information file processing server in the case that the transfer operation of a second resource associated with the security information file has been performed;
a second smart card, configured to assist the security information file processing server to generate the security information file by means of the data interaction with the security information file processing server, and then to complete the operations related to the uploading and confirmation of the document by means of the data interaction with the security information file processing server;
a first security information data processing server, configured to assist to perform the checking operation of the security information file by means of the data interaction with the security information file processing server and the center of authentication (CA), and to assist the security information file processing server to perform the transfer operation of a second resource;
a second security information data processing server, configured to assist to perform the checking operation of the security information file by means of the data interaction with the security information file processing server and the center of authentication (CA), and to assist the security information file processing server to perform the transfer operation of a second resource; and
a center of authentication, configured to complete the corresponding data authentication operation by means of the data interaction with the security information file processing server, the first security information data processing server and the second security information data processing server.

19. A security information file processing server, comprising:
a user interface, configured to receive a security information file establishing request from a second user, and to transmit the security information file establishing request to a master controller module, the user interface also is configured to receive the information associated with the transmitting of the first resource input by the second user, and to transmit the information associated with the transmitting of the first resource to the master controller module, and the user interface is further configured to receive the information associated with the arrival of the first resource input by a first user, and to transmit the information associated with the arrival of the first resource to the master controller module;
a device interface, configured to perform the data communication between the security information file processing server and the first smart card and to perform the data communication between the security information file processing server and the second smart card;
a master controller module, configured to processing the received security information file establishing request, the information associated with the transmitting of the first resource and the information associated with the arrival of the first resource, and to transmit a corresponding notice message to the first user and/or the second user via a notification module so as to complete the operations related to the transfer of the first resource, wherein when the security information file establishing request is received, the master controller module forwards the security information file establishing request to a security information file generation module;
a security information file generation module, configured to generate and store the security information file based on the received security information file establishing request and by means of the data interaction with the first smart card, the second smart card, the first security information data processing server, the second security information data processing server and the center of authentication (CA), and to transmit a corresponding notice message to the first user and/or the second user via the notification module;
a notification module, configured to transmit the notice message to the first user and/or the second user in a predefined manner; and
a storage module, configured to store the security information file, the information associated with the transmitting of the first resource, the information associated with the arrival of the first resource and the document required for taking delivery of the first resource.
